# EUROPÄISCHE PATENTSCHRIFT

(11) **EP 3 865 387 B1**
(45) Veröffentlichungstag und Bekanntmachung des Hinweises auf die Patenterteilung: **12.03.2025**
(21) Anmeldenummer: 20000431.5
(22) Anmeldetag: 27.11.2020
(51) Int. Cl.: B62M 9/10

(54) **RITZEL FÜR EINEN FAHRRAD-ANTRIEB**
SPROCKET OR CHAINRING FOR A BICYCLE DRIVE
PLATEAU OU PIGNON POUR ENTRAÎNEMENT DE VÉLO

(30) Priorität: 14.02.2020 DE 102020201889
(43) Veröffentlichungstag der Anmeldung: 18.08.2021
(73) Patentinhaber: SRAM Deutschland GmbH, 97424 Schweinfurt (DE)
(72) Erfinder: Geist, Peter, 10245 Berlin (DE)

(56) Entgegenhaltungen:
- EP-A1- 3 401 203
- EP-A1- 3 461 731
- WO-A1-2014/166592

## Beschreibung

Die vorliegende Erfindung betrifft ein Ritzel für einen Fahrradantrieb, genauer ein Ritzel, welches einen Außenring mit einer Außenverzahnung zum Eingriff in eine Fahrradkette, einen koaxial zu dem Außenring angeordneten und drehfest mit diesem verbundenen Innenring mit einer zentralen Öffnung sowie einen einstückig mit dem Innenring ausgebildeten und axial zu einer Seite von diesem vorstehenden umlaufenden Kragen umfasst, der als durchgezogener Kragen ausgebildet ist. An der radialen Innenseite des Kragens ist ein Innenprofil mit mehreren radial nach innen vorstehenden radialen Vorsprüngen vorgesehen. Das Dokument EP3401203 offenbart ein gattungsgemäßes Ritzel.

Der Begriff Ritzel soll hier sowohl ein Ritzel im engeren Sinne, also ein hinteres Ritzel bezeichnen, welches dazu ausgebildet ist, Drehmoment auf einen Antreiber an einer Hinterradnabe eines Fahrrads zu übertragen, aber auch ein vorderes Ritzel bzw. Kettenblatt, welches dazu ausgebildet ist, Drehmoment von einer Tretkurbel des Fahrrads aufzunehmen und über die Fahrradkette und ein mit dieser kämmendes hinteres Ritzel an den Antreiber und damit an das Hinterrad des Fahrrads weiterzuleiten.

Das Innenprofil eines solchen Ritzels muss verschiedenen Anforderungen genügen. So ergibt sich eine minimale radiale Abmessung oder Fläche der Vorsprünge des Innenprofils unter anderem aus den Werkstoffen des Ritzels und desjenigen Bauteils, mit dem es im montierten Zustand zur Drehmomentübertragung gekoppelt ist, sowie aus den bestehenden Anforderungen an das zu übertragende Drehmoment und die Belastungsdauer.

Ist die radiale Abmessung der Vorsprünge oder in anderen Worten die Tiefe des Innenprofils zu gering, kann sich im Betrieb eine unerwünschte Deformation einer Lastflanke des Ritzels oder/und des vorgenannten, mit dem Ritzel gekoppelten Bauteils ergeben

Auch in axialer Richtung muss der Kragen genügend Abstützfläche zu den daran anliegenden Komponenten des Fahrrads bereitstellen, damit sich im Fahrbetrieb keine Deformation bzw. bei der Montage des Ritzels oder der Ritzel-Kassette keine zu starke Beeinflussung des Anzugmoments ergibt.

In der Praxis werden die vorgenannten gattungsgemäßen Ritzel bisher so hergestellt, dass in einem auch als "Kragenziehen" bezeichneten Umformverfahren zunächst ein Kragen mit einer kreisrunden radialen Innenfläche und einer kreisrunden radialen Außenfläche hergestellt wird. Anschließend wird das Innenprofil in die radiale Innenseite des Kragens hinein geschnitten, wobei die radiale Außenfläche des Kragens kreisrund bleibt.

Damit die vorgenannten Flächen des Kragens zur axialen Abstützung und insbesondere die Flächen zur Drehmomentübertragung am Innenprofil ausreichend groß sind, ist bei den bekannten Ritzeln daher ein verhältnismäßig großer Materialabtrag und damit ein hoher Materialeinsatz zur Herstellung eines Ritzels notwendig.

Vor dem Hintergrund dieses Standes der Technik besteht die Aufgabe der vorliegenden Erfindung gemäß einem ersten Aspekt darin, ein materialsparender herstellbares Ritzel mit guten Drehmomentübertragungseigenschaften bereitzustellen.

Diese Aufgabe wird erfindungsgemäß dadurch gelöst, dass auch an der radialen Außenseite des Kragens ein Außenprofil mit mehreren radialen Vertiefungen vorgesehen ist, die den radialen Vorsprüngen des Innenprofils hinsichtlich Anzahl und Anordnung entsprechen.

Damit ist es möglich, zumindest eine Vorform des endgültigen Innenprofils gemeinsam mit dem Außenprofil in einem Umformverfahren herzustellen, bei dem Material nur umverteilt, nicht jedoch abgetragen wird.

Zwar wird ggf. nachträglich am Innenprofil noch Material entfernt, um eine gewünschte Profilform oder/und Profiltiefe zu erzeugen, im Vergleich zu einem gattungsgemäßen Ritzel, bei dem das Innenprofil ausschließlich durch Materialabtrag erzeugt wird, kann die Menge des nachträglich zu entfernenden Materials jedoch reduziert werden, was den notwendigen Materialaufwand verkleinert.

Begriffe wie radial, axial, koaxial etc. beziehen sich vorliegend auf eine Mittelachse des Ritzels, die im Betrieb auch dessen Rotationsachse entspricht.

Vorzugsweise sind Innenring und Außenring bei dem erfindungsgemäßen Ritzel einstückig miteinander ausgebildet.

Die Dicke des Innenrings, d.h. dessen Abmessung in axialer Richtung kann beispielsweise zwischen 1,5 mm und 2 mm betragen, vorzugsweise zwischen 1,6 mm und 1,8 mm. Dabei kann der Kragen axial um einige Millimeter vom Innenring vorstehen, so dass das Ritzel an der zentralen Öffnung eine axiale Abmessung von beispielsweise 2,5 mm bis 8 mm aufweist, vorzugsweise von 3 bis 7 mm, besonders bevorzugt von 3,3 mm bis 6,5 mm. Die vorgenannte axiale Abmessung entspricht in etwa der axialen Ausdehnung des Innenprofils abzüglich minimaler Korrekturen aufgrund abgerundeter Kanten.

Bevorzugt wird das erfindungsgemäße Ritzel als hinteres Ritzel eingesetzt. In diesem Fall dienen die Vorsprünge des Innenprofils des umlaufenden Kragens als Mitnehmer-Elemente, die dazu ausgebildet sind, Drehmoment von dem Ritzel auf einen Antreiber an einer Hinterradnabe eines Fahrrads zu übertragen.

Alternativ kann das erfindungsgemäße Ritzel als vorderes Ritzel oder Kettenblatt eingesetzt werden, In diesem Fall dienen die Vorsprünge des Innenprofils des umlaufenden Kragens dazu, dass Drehmoment von den Tretkurbeln oder einem damit verbundenen Bauteil auf die Vorsprünge übertragen wird.

In beiden Fällen kann der umlaufende Kragen im am Fahrrad montierten Zustand des Ritzels axial nach innen von dem Innenring vorstehen, das heißt zu derjenigen Seite, die näher an einer Radmittelebene des Fahrrads angeordnet ist. Es soll aber auch nicht ausgeschlossen sein, in den beiden vorgenannten Fällen das Ritzel jeweils so zu montieren, dass der umlaufende Kragen axial nach außen von dem Innenring vorsteht, etwa wenn der Kragen als Abstandhalter zu einem benachbarten Ritzel verwendet wird.

Erfindungsgemäß ist vorgesehen, dass jeder der Vorsprünge des Innenprofils eine bezüglich einer vorgegebenen Drehrichtung um eine Mittelachse des Ritzels vorlaufend angeordnete erste Flanke und eine bezüglich der vorgegebenen Drehrichtung nachlaufend angeordnete zweite Flanke aufweist, wobei für wenigstens einen, vorzugsweise für mehrere und besonders bevorzugt für jeden der Vorsprünge des Innenprofils die erste und die zweite Flanke nicht spiegelsymmetrisch zueinander ausgebildet sind.

Bei Konfigurationen, bei denen Drehmoment nur in einer Drehrichtung übertragen wird, etwa bei einem Freilauf, kann damit gleichzeitig eine ausreichend große Drehmoment übertragende Fläche der als Lastflanke dienenden ersten Flanke erreicht werden und zudem durch eine entsprechend kleiner ausgebildete Fläche der zweiten Flanke oder Gegenflanke das Risiko eines Verkantens verringert werden.

Hierzu kann insbesondere vorgesehen sein, dass die erste Flanke des wenigstens einen Vorsprungs des Innenprofils radial länger ausgebildet ist als die zweite Flanke. Vorzugsweise gilt dies für mehrere, besonders bevorzugt für jeden der Vorsprünge des Innenprofils. Beispielsweise kann eine radiale Länge der zweiten Flanke 75% oder weniger der radialen Länge der ersten Flanke betragen, vorzugsweise 66% oder weniger.

Wird das erfindungsgemäße Ritzel als hinteres Ritzel eingesetzt, ist die vorgegebene Drehrichtung bevorzugt die Vorwärtsdrehrichtung, wird das Ritzel als Kettenblatt eingesetzt, ist die vorgegebene Richtung bevorzugt die Rückwärtsdrehrichtung, denn dann ist in jedem der beiden Fälle die erste Flanke jeweils die Lastflanke, über die Drehmoment übertragen wird.

Um die Außenverzahnung des Ritzels in axialer Richtung platzsparend und aerodynamisch günstig nahe am Hinterrad positionieren zu können, kann vorgesehen sein, dass eine Mittelebene der Außenverzahnung zum Eingriff in eine Fahrradkette oder eine Mittelebene des Außenrings axial von einer Mittelebene des Innenrings beabstandet ist. Besonders bevorzugt ist eine axiale Stirnfläche des umlaufenden Kragens axial zwischen der Mittelebene des Innenrings und der Mittelebene der Außenverzahnung oder der Mittelebene des Außenrings angeordnet.

Das erfindungsgemäße Ritzel kann beispielsweise als Abschlussritzel einer Ritzel-Kassette eingesetzt werden, also als das Ritzel eines Ritzelpakets, welches als einziges dazu ausgebildet ist, direkt Drehmoment auf einen Antreiber an einer Hinterradnabe eines Fahrrads zu übertragen.

Alternativ kann es aber auch als Einzelritzel oder Steckritzel ausgebildet sein. Im letzteren Fall können mehrere oder alle Ritzel eines Ritzelpakets als erfindungsgemäße Ritzel ausgebildet sein, die jeweils zur Drehmomentübertragung in Eingriff mit einem Antreiber stehen. Die axial zu einer Seite vorstehenden Kragen der erfindungsgemäßen Ritzel können dabei gleichzeitig als Abstandhalter dienen, was die Anzahl der notwendigen Bauteile reduziert.

Daher wird auch Schutz beantragt für eine Ritzel-Kassette für einen Fahrrad-Antrieb, umfassend ein Ritzelpaket mit mehreren koaxial angeordneten, axial voneinander beabstandeten und drehfest miteinander verbundenen Ritzeln mit unterschiedlichen Durchmessern, wobei eines dieser Ritzel ein Abschlussritzel ist, welches dazu ausgebildet ist, direkt Drehmoment auf einen Antreiber an einer Hinterradnabe eines Fahrrads zu übertragen, und wobei das Abschlussritzel ein erfindungsgemäßes Ritzel ist, wie es vorstehend beschrieben wurde.

Weiterhin wird auch Schutz beantragt für einen Fahrradantrieb mit einem Antreiber und wenigstens einem erfindungsgemäßen Ritzel, vorzugsweise mit mehreren erfindungsgemäßen Ritzeln, oder mit einer vorstehend beschriebenen Ritzel-Kassette.

Gemäß einem zweiten Aspekt der Erfindung betrifft diese auch ein Verfahren zur Herstellung eines Ritzels für einen Fahrrad-Antrieb, umfassend die folgenden Schritte:
i) Ausstanzen eines Ritzel-Rohlings mit einem zentralen Vorloch und
ii) Weiterverarbeiten des Ritzel-Rohlings zu einem Ritzel mit einer zentralen Öffnung, einem Innenring und einem einstückig mit dem Innenring ausgebildeten und axial zu einer Seite von diesem vorstehenden umlaufenden Kragen, vorzugsweise zu einem erfindungsgemäßen Ritzel, wie es vorstehend beschrieben wurde, wobei der Schritt ii) den folgenden Schritt umfasst:
   a) Umformen des Ritzel-Rohlings, wobei ein Stempel durch das Vorloch des Ritzel-Rohlings in eine Matrize gedrückt wird, um den umlaufenden Kragen zu bilden

Die einleitend genannte Aufgabe der Erfindung wird gemäß dem zweiten Aspekt der Erfindung durch ein Verfahren mit den Merkmalen des unabhängigen Verfahrensanspruchs gelöst.

Erfindungsgemäß wird durch das Umformen des Ritzel-Rohlings in Schritt a) sowohl ein Innenprofil mit mehreren, radial nach innen vorstehenden radialen Vorsprüngen an der radialen Innenseite des Kragens ausgebildet wie auch an der radialen Außenseite des Kragens ein Außenprofil mit mehreren radialen Vertiefungen, die den Vorsprüngen des Innenprofils hinsichtlich Anzahl und Anordnung entsprechen.

Die vorstehenden Erläuterungen zu den Vorrichtungsansprüchen enthalten Verfahrensaspekte und umgekehrt, so dass ergänzend auf diese vorstehenden Ausführungen verwiesen wird.

Bevorzugt wird in Schritt i) das zentrale Vorloch nicht kreisrund sondern so ausgebildet, dass es eine Mehrzahl von radial nach innen vorstehenden Vorsprüngen aufweist, die den radial nach innen vorstehenden radialen Vorsprüngen des später ausgebildeten Innenprofils des Kragens hinsichtlich Anzahl und Anordnung entsprechen, was eine einfache und gleichmäßigere Material-Umverteilung im folgenden Umformschritt ermöglicht.

Das Außenprofil des Kragens und das Innenprofil oder zumindest eine Vorstufe des Innenprofils des Kragens werden bei dem Umformverfahren dann beispielsweise durch geeignet geformte Stempel und Matrizen erzeugt.

Gemäß einer bevorzugten Ausführungsform kann vorgesehen sein, dass der Schritt ii) nach dem Schritt a) weiterhin einen Schritt b) umfasst, bei dem das beim Umformverfahren hergestellte Innenprofil des umlaufenden Kragens nachbearbeitet wird, beispielsweise durch Schneiden oder Fräsen.

Beispielsweise können besonders toleranzempfindliche Flächen nachbearbeitet werden, insbesondere solche, die im montierten Zustand direkt in Kontakt mit dem Antreiber stehen.

Insbesondere kann in diesem Nachbearbeitungsschritt b) die im Hinblick auf das Ritzel bereits beschriebene Asymmetrie der beiden Flanken von mindestens einem Vorsprung hergestellt werden.

So kann vorgesehen sein, dass beim Schritt b) für wenigstens einen der Vorsprünge des Innenprofils, bevorzugt für mehrere der Vorsprünge und besonders bevorzugt für jeden der Vorsprünge, eine bezüglich einer ausgewählten Drehrichtung vorlaufend angeordnete erste Flanke des Vorsprungs oder/und eine bezüglich der ausgewählten Drehrichtung nachlaufend angeordnete zweite Flanke des Vorsprungs so nachbearbeitet wird bzw. werden, dass die erste Flanke nach der Nachbearbeitung radial länger ausgebildet ist als die zweite Flanke.

Das Umformverfahren zur Ausbildung des Kragens kann mehrstufig ausgeführt werden, Beispielsweise kann der Schritt a) nach einem ersten Umformschritt a1), in dem der Kragen mit Innen- und Außenprofil geformt wird, bevorzugt noch einen weiteren Umformschritt a2) umfassen, bei dem der Ritzel-Rohling bzw. das Ritzel weiter umgeformt wird, um eine vorgegebene axiale Abmessung des Kragens einzustellen.

Hierzu kann die im ersten Umformungsschritt verwendete Matrize durch eine modifizierte Matrize ersetzt werden. Dies erlaubt vorzugsweise auch die Einstellung einer gewünschten Planheit der axialen Stirnfläche des Kragens. Gewünschtenfalls kann in Schritt a2) auch der im ersten Umformungsschritt verwendete Stempel ersetzt werden.

Nur am Rande sei bemerkt, dass sich die vorstehend beschriebene Technik auch zur Herstellung eines Scheibenbremsrotors für ein Fahrrad eignet.

Nachfolgend wird die vorliegende Erfindung anhand eines bevorzugten Ausführungsbeispiels näher erläutert, das in den beiliegenden Figuren illustriert ist. Dabei zeigen:
- Fig. 1: eine schematische Seitenansicht eines Fahrrads mit einem Ritzel gemäß einem bevorzugten Ausführungsbeispiel der vorliegenden Erfindung.
- Fig. 2: das Ritzel gemäß dem bevorzugten Ausführungsbeispiel der Erfindung aus Figur 1 in einer Draufsicht auf die Rückseite des Ritzels,
- Fig. 2a: eine Ausschnittvergrößerung des Gegenstands von Fig. 2
- Fig. 3: den Gegenstand von Fig. 2 in einer Draufsicht auf die Vorderseite des Ritzels,
- Fig. 4: eine perspektivische Ansicht des Gegenstands von Fig. 2,
- Fig.5: eine Schnittansicht des Gegenstands von Fig. 3 bezüglich einer dort mit V-V bezeichneten Schnittebene,
- Fig. 6: eine Vergrößerung des in Fig. 5 mit A bezeichneten Bereichs,
- Fig. 7: eine Ausschnittvergrößerung einer perspektivischen Ansicht des Gegenstands der Figuren 2 bis 6 in einer Teilschnitt-Darstellung,
- Fig. 8: eine weitere Ausschnittvergrößerung des Gegenstands von Fig. 2, welche die Form der Flanken der Vorsprünge des Innenprofils zeigt,
- Fig. 9: eine perspektivische Ansicht einer Ritzel-Kassette gemäß einem bevorzugten Ausführungsbeispiel der Erfindung in einer Teilschnitt-Darstellung, bei der das in den Figuren 2 bis 8 dargestellte Ritzel als Abschlussritzel eingesetzt ist,
- Fig. 10: ein Flussdiagramm zur Illustration eines Verfahrens gemäß einem bevorzugten Ausführungsbeispiel der vorliegenden Erfindung,
- Fig. 11: eine schematische Darstellung eines Ritzel-Rohlings, der bei dem Verfahren gemäß Fig. 10 als Zwischenprodukt erzeugt wird.
- Fig. 12: in Teilabbildung a) eine Querschnittsdarstellung von einem in einem Umform-Schritt des Verfahrens gemäß Fig. 10 verwendeten Formwerkzeug sowie dem darin umgeformten Ritzel und in Teilabbildung b) eine Ausschnittvergrößerung des in Teilabbildung a) mit Z bezeichneten Bereichs, sowie
- Fig. 13: in Teilabbildung a) eine Querschnittsdarstellung von einem in einem weiteren Umform-Schritt des Verfahrens gemäß Fig. 10 verwendeten Formwerkzeug sowie dem darin umgeformten Ritzel und in Teilabbildung b) eine Ausschnittvergrößerung des in Teilabbildung a) mit Z bezeichneten Bereichs.

Aus Gründen der Übersichtlichkeit ist in den Figuren nicht immer jedes Merkmal mit einem Bezugszeichen versehen, sondern in erster Linie nur diejenigen Merkmale, die zur Erläuterung der jeweiligen Figur notwendig sind. Dies gilt insbesondere, wenn mehrere gleichartige Merkmale dargestellt sind, von denen dann in den meisten Fällen nur eines oder einige ausgewählte mit Bezugszeichen versehen ist bzw. sind.

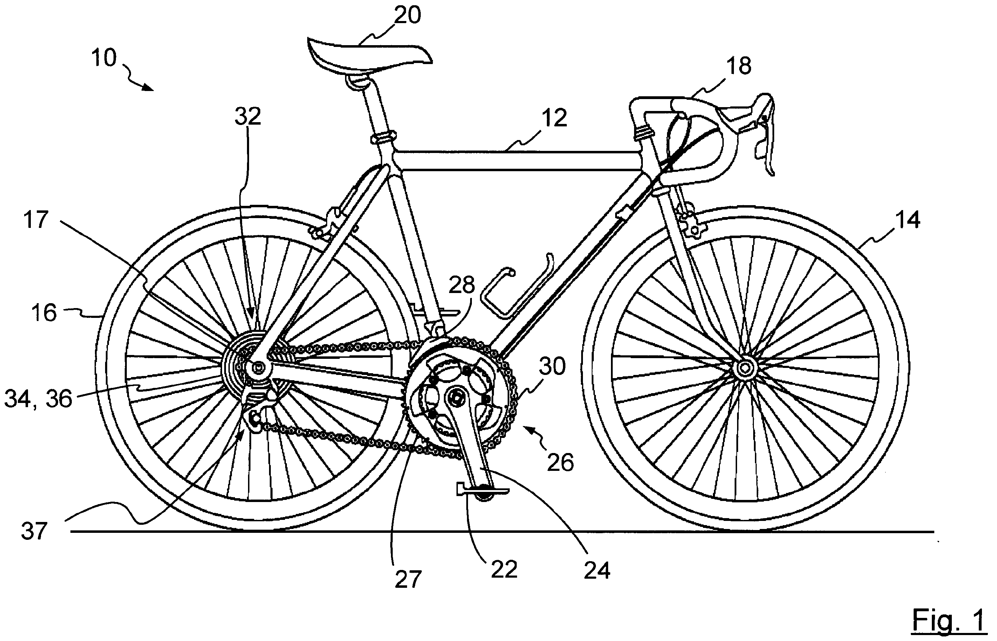

In Figur 1 ist ein Fahrrad allgemein mit 10 bezeichnet. Das Fahrrad 10 umfasst einen Rahmen 12, ein Vorderrad 14, ein Hinterrad 16, einen Lenker 18 und einen Sattel 20. Auch wenn es sich bei dem hier beispielhaft dargestellten Fahrrad 10 um ein Rennrad handelt, ist klar, dass die vorliegend beschriebene Erfindung auch bei anderen Fahrradtypen zum Einsatz kommen kann, etwa bei einem Mountainbike.

In üblicher Weise kann am Fahrrad 10 über Pedale 22 und Kurbeln 24 ein Drehmoment in ein vorderes Ritzel oder Kettenblatt 27 einer Kettenblattgarnitur 26 eingeleitet werden. Dieses Drehmoment wird dann über eine geschlossen umlaufende Fahrradkette 30 zu einer Ritzel-Kassette 32 an einer Hinterradnabe 17 des Fahrrads 10 übertragen.

Die Ritzel-Kassette 32 umfasst ein Ritzelpaket mit mehreren, koaxial angeordneten, axial voneinander beabstandeten und drehfest miteinander verbundenen hinteren Ritzeln mit unterschiedlichen Durchmessern, von denen im dargestellten Beispiel das größte ein Ritzel 34 gemäß einem Ausführungsbeispiel der Erfindung ist.

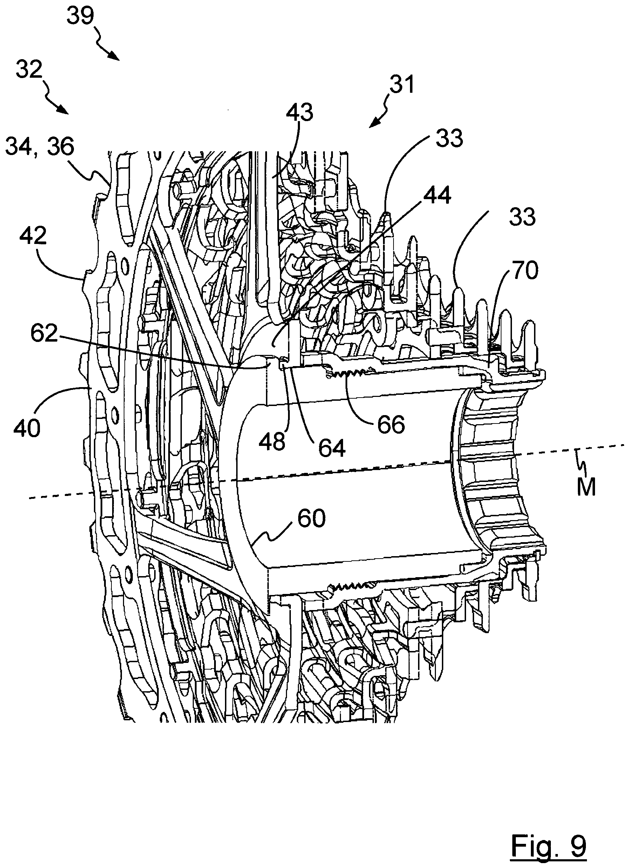

Das erfindungsgemäße Ritzel 34 dient vorliegend als Abschlussritzel 36 und ist dazu ausgebildet, das über die Fahrradkette 30 eingeleitete Drehmoment direkt auf einen in Figur 1 nicht sichtbaren Antreiber an der Hinterradnabe 17 zu übertragen, der genauer im Zusammenhang mit Figur 9 erläutert wird.

Das jeweils mit der Fahrradkette 30 kämmende hintere Ritzel der Ritzel-Kassette 32 kann in bekannter Weise durch ein hinteres Schaltwerk 37 ausgewählt werden, das entsprechende vordere Ritzel oder Kettenblatt 27 durch einen vorderen Umwerfer 28. Das hintere Schaltwerk 37 und der vordere Umwerfer 28 können jeweils in bekannter Art mechanisch oder/und elektrisch angesteuert sein.

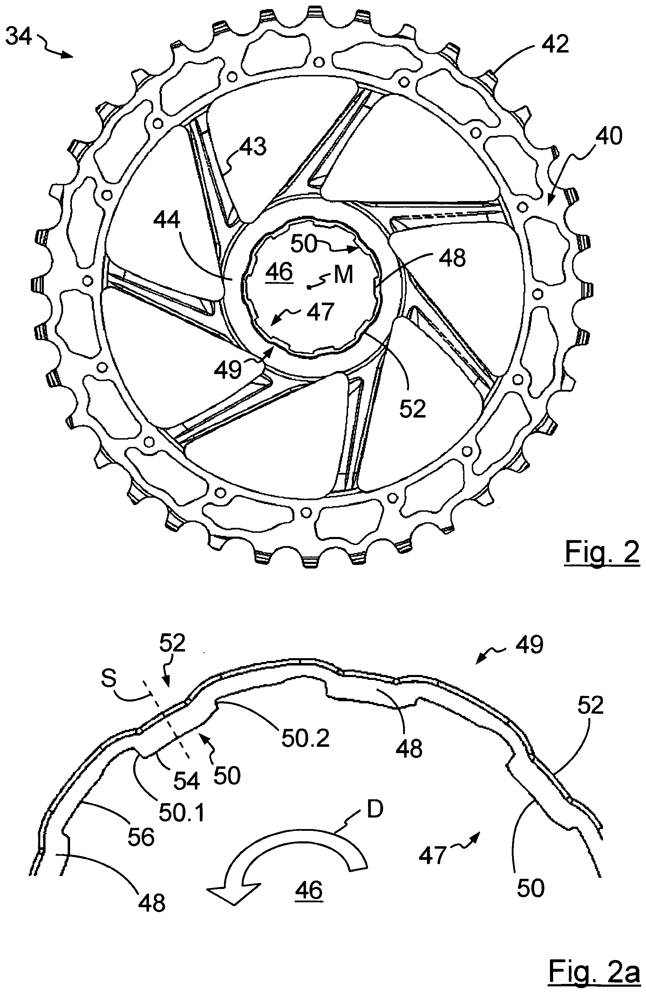

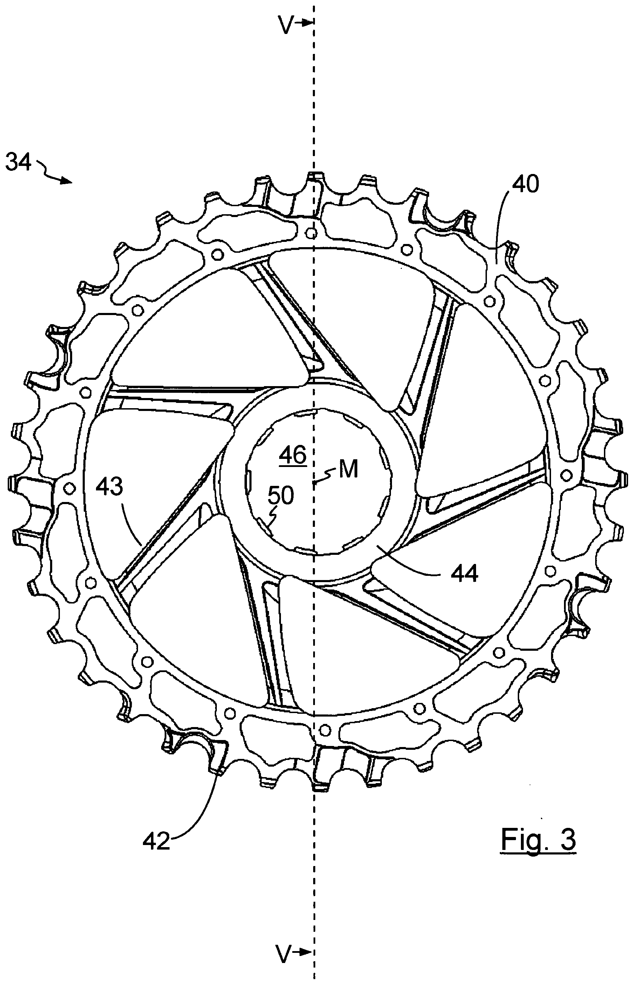

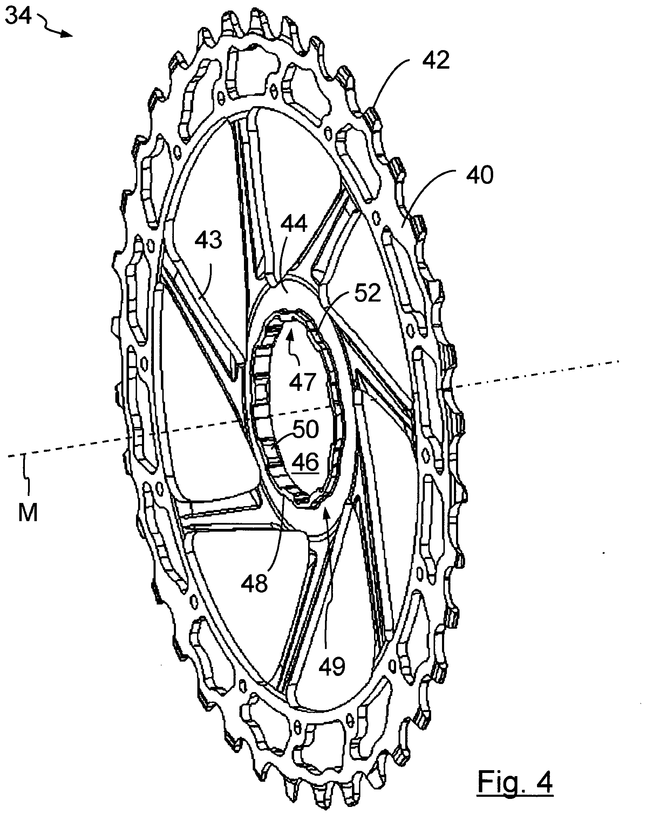

Figur 2 zeigt eine Draufsicht auf eine Rückseite des erfindungsgemäßen Ritzels 34, also auf die Seite, die im montierten Zustand dem Hinterrad 16 zugewandt ist. Eine Draufsicht auf die Vorderseite des Ritzels 34 ist in Figur 3 dargestellt, eine perspektivische Ansicht in Figur 4.

Das Ritzel 34 umfasst einen Außenring 40 mit einer Außenverzahnung 42 zum Eingriff in die Fahrradkette 30 und einen bezüglich der Mittelachse M des Ritzels 34 koaxial zu dem Außenring 40 angeordneten und drehfest mit diesem verbundenen, vorliegend einstückig mit diesem ausgebildeten Innenring 44 mit einer zentralen Öffnung 46.

Innenring 44 und Außenring 40 sind in erster Näherung als planare Ringscheiben ausgebildet und sind in bekannter Weise durch mehrere vom Innenring 44 aus schräg nach außen verlaufende Verbindungsarme 43 miteinander verbunden.

Einstückig mit dem Innenring 44 ausgebildet und axial zu einer Seite vom Innenring 44 vorstehend, in Figur 2 axial zum Betrachter hin axial vorstehend, ist ein umlaufender Kragen 48 an dem Ritzel 34 vorgesehen.

Der Kragen 48 weist an seiner radialen Innenseite ein Innenprofil 47 mit mehreren, radial nach innen vorstehenden Vorsprüngen 50 auf. An der radialen Außenseite des Kragens 48 ist ein Außenprofil 49 mit mehreren radialen Vertiefungen 52 vorgesehen, die den radialen Vorsprüngen 50 des Innnenprofils 47 hinsichtlich Anzahl und Anordnung entsprechen.

In den Figuren 4 bis 6 ist zu erkennen, dass vorliegend eine Mittelebene E₄₂ der Außenverzahnung 42 oder eine Mittelebene E₄₀ des Außenrings 40 gegenüber einer Mittelebene E₄₄ des Innenrings 44 zwar parallel aber axial versetzt ausgebildet ist. In anderen Worten ist das Ritzel 34 geschüsselt ausgebildet, was es ermöglicht, die Außenverzahnung 42 näher am Hinterrad 16 zu positionieren.

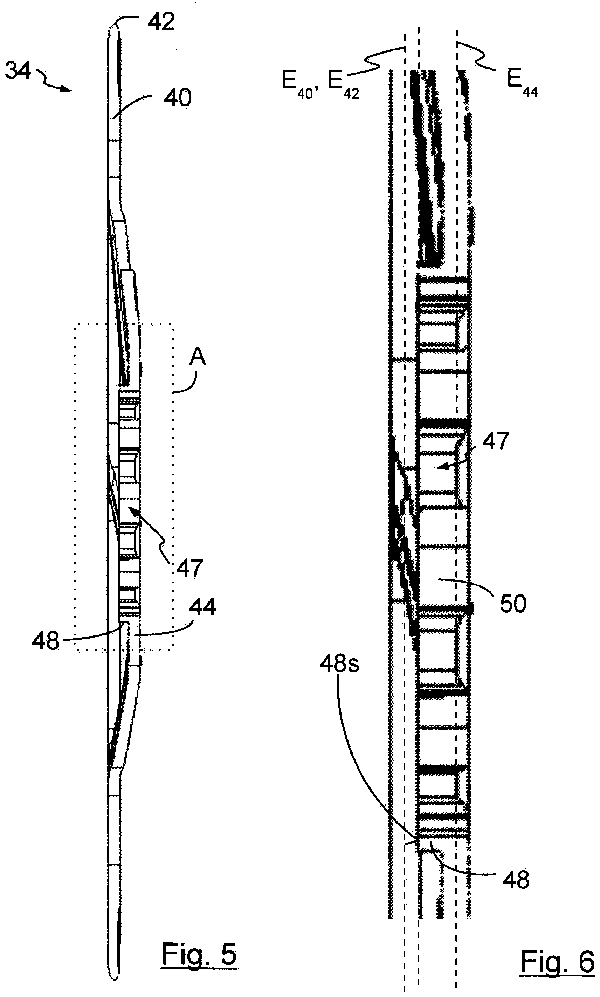

Genauer ist im dargestellten Beispiel eine axiale Stirnfläche 48s des umlaufenden Kragens 48 axial zwischen der Mittelebene E₄₄ des Innenrings 44 und der Mittelebene E₄₂ der Außenverzahnung 42 bzw. der Mittelebene E₄₀ des Außenrings 40 angeordnet (vgl. Fig. 6).

Nachfolgend wird die Form des Kragens 48, insbesondere die Form des Innenprofils 47 und des Außenprofils 49 unter Bezugnahme auf die Figuren 2a, 4, 7 und 8 genauer beschrieben.

Im vorliegenden Fall weist das Innenprofil 47 beispielsweise neun gleichmäßig über den Umfang des Kragens 48 verteilte Vorsprünge 50 auf, das Außenprofil 49 entsprechend neun ebenso verteilte Vertiefungen 52. Die genaue Form des Innenprofils 47 kann dabei von der Form des Außenprofils 49 abweichen und ist an die Form des verwendeten Antreibers angepasst.

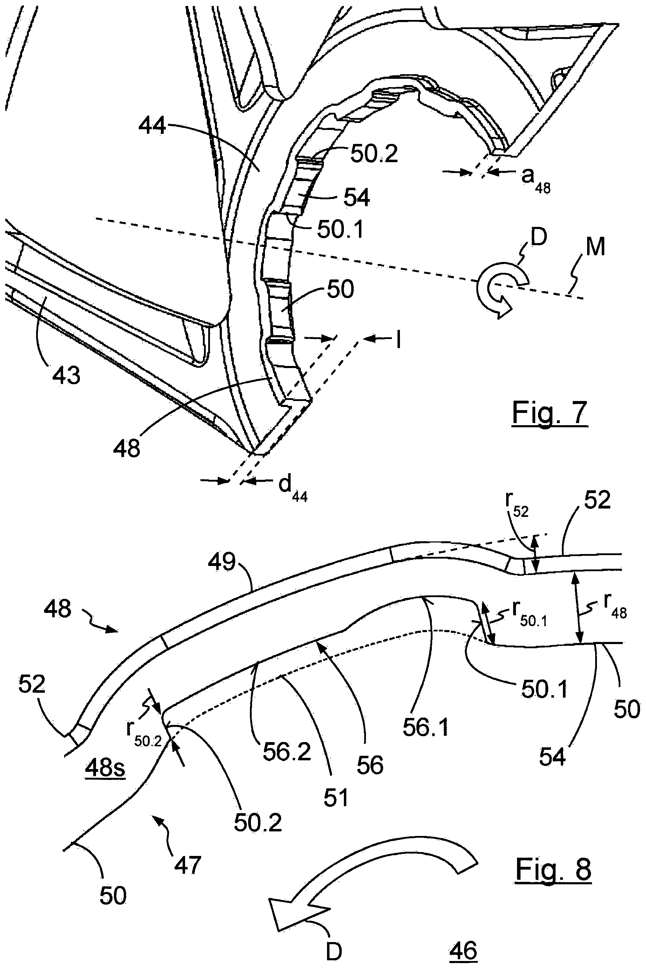

Bevorzugt erstreckt sich das Außenprofil 49 in etwa über die gesamte axiale Länge a₄₈ des Kragens 48 und das Innenprofil 47 erstreckt sich in etwa über eine axiale Länge l, die sich als Summe aus der axialen Länge a₄₈ des Kragens 48 und der axialen Ausdehnung oder Dicke d₄₄ des Innenrings 44 ergibt (vgl. Fig. 7).

Die Dicke d₄₄ des Innenrings liegt beispielsweise zwischen 1,5 mm und 2 mm, vorzugsweise zwischen 1,6 mm und 1,8 mm. Die vorstehend erwähnte axiale Länge l beträgt hier etwa 2,5 mm bis 8 mm, vorzugsweise von 3 mm bis 7 mm, besonders bevorzugt von 3,3 mm bis 6,5 mm.

Die Figuren 2a, 7 und 8 zeigen die Form des Innenprofils 47 und des Außenprofils 49 des Kragens 48 in verschiedenen Ausschnittvergrößerungen, die zeigen, dass für die Vorsprünge 50 des Innenprofils 47 eine deutliche Asymmetrie vorliegt, während die entsprechenden Vertiefungen 52 des Außenprofils 49 jeweils im Wesentlichen spiegelsymmetrisch bezüglich einer jeweiligen Spiegelebene S aufgebaut sind, die in Figur 2a für einen ausgewählten Vorsprung 50 bzw. die entsprechende Vertiefung 52 angedeutet ist.

Jeder Vorsprung 50 weist eine bezüglich einer ausgewählten Drehrichtung D (vorliegend der Vorwärtsdrehrichtung) vorlaufend angeordnete erste Flanke 50.1 (Lastflanke) und eine bezüglich dieser Drehrichtung D nachlaufend angeordnete zweite Flanke 50.2 (Gegenflanke) auf, die durch einen Plateau-Abschnitt 54 miteinander verbunden sind.

Zwischen unmittelbar benachbarten Vorsprüngen 50 des Innenprofils 47 ist ein vertiefter Bereich 56 vorgesehen, der zwei Abschnitte 56.1 und 56.2 aufweist, wobei der erste Abschnitt 56.1 unmittelbar an die erste Flanke 50.1 eines Vorsprungs 50 angrenzt, der zweite Abschnitt 56.2 unmittelbar an die zweite Flanke 50.2 eines anderen benachbarten Vorsprungs 50. Der erste Abschnitt 56.1 ist dabei stärker zurückgesetzt als der zweite Abschnitt 56.2, was dazu führt, dass die erste Flanke 50.1 in radialer Richtung länger ausgebildet ist als die zweite Flanke 50.2. Beispielsweise kann die radiale Länge r_{50.2} der zweiten Flanke 75% oder weniger der radialen Länge r_{50.1} der ersten Flanke betragen, vorzugsweise 66% oder weniger (vgl. Fig. 8).

Wie nachfolgend noch genauer beschrieben, wird der Kragen 48 in einem Umformverfahren hergestellt, bei dem durch Verwendung geeigneter Werkzeuge das Außenprofil 49 und gemeinsam damit zumindest eine Vorform des Innenprofils 47 ausgebildet werden, die in Figur 8 durch eine gestrichelte Linie angedeutet ist und auch als vorläufiges Innenprofil 51 bezeichnet wird..

Die endgültige Form des Innenprofils 47, insbesondere die endgültige Form der Flanken 50.1, 50.2 der Vorsprünge des 50 des Innenprofils 47 und der vertieften Bereiche 56 wird bevorzugt in einem Nachbearbeitungsschritt beispielsweise durch Schneiden oder Fräsen erzeugt.

Es ist festzuhalten, dass im dargestellten Ausführungsbeispiel die radialen Vorsprünge der Vorform 51 des Innenprofils vor dem Nachbearbeitung in erster Näherung spiegelsymmetrisch ausgebildet sind und die Asymmetrie der Vorsprünge 50 des engültigen Innenprofils 47 erst durch den Nachbearbeitungsschritt eingebracht wird.

Vor der Nachbearbeitung weist der Kragen 48 eine über den Umfang des Kragens im Wesentlichen konstante radiale Abmessung r₄₈ von 1 bis 2 mm, vorzugsweise von 1,3 bis 1.5 mm auf, besonders bevorzugt von etwa 1,4 mm. Die radiale Tiefe r₅₂ der Vertiefungen 52, welche der radialen Länge der Vorsprünge der Vorform 51 des Innenprofils entspricht, liegt beispielsweise zwischen 0,5 mm und 0,7 mm.

Fig. 9 zeigt eine perspektivische Ansicht einer Ritzel-Kassette 32 gemäß einem bevorzugten Ausführungsbeispiel der Erfindung in einer Teilschnitt-Darstellung. Die Ritzel-Kassette 32 umfasst ein Ritzelpaket 31 mit mehreren, bezüglich der Mittelachse M koaxial angeordneten, axial voneinander beabstandeten und drehfest miteinander verbundenen Ritzeln, von denen das größte ein Ritzel 34 gemäß den Figuren 1 bis 8 ist. Die übrigen, herkömmlichen Ritzel sind mit dem Bezugszeichen 33 gekennzeichnet.

Das Ritzelpaket 31 ist auf einem Antreiber 60 angebracht, der in bekannter Weise an der in Figur 9 nicht dargestellten Hinterradnabe des Fahrrads 10 montiert werden kann.

Der Antreiber 60 weist eine hohlylindrische Grundform auf, mit einem ringförmigen Vorsprung 62 an einem axialen Ende, einem sich axial an den ringförmigen Vorsprung 62 anschließenden Außenverzahnungsabschnitt 64 und einem axial auf diesen folgenden Gewindeabschnitt 66.

Zur Übertragung von Drehmoment von dem Ritzelpaket 31 auf den Antreiber 60 steht der Antreiber 60 im Bereich des Außenverzahnungsabschnitts 64 in Eingriff dem den als Mitnehmer-Elementen ausgebildeten Vorsprüngen 50 des Innenprofils 47 des Kragens 48 von dem als Abschlussritzel 36 ausgebildeten größten Ritzel 34 gemäß dem Ausführungsbeispiel der Erfindung.

Auf den Gewindeabschnitt 66 kann eine Adapter-Hülse 70 aufgeschraubt werden, die zusammen mit dem ringförmigen Vorsprung 60 zur axialen Fixierung des Ritzelpakets 31 dient.

Antreiber 60, Adapter-Hülse und die übrigen Ritzel 33 des Ritzelpakets 31 mit Ausnahme des Abschlussritzels 36 können in herkömmlicher Weise ausgeführt sein, beispielsweise wie in der Druckschrift EP 3461731 A1 beschrieben.

Bei Verwendung eines anderen, herkömmlichen Adapters mit einem Außenverzahnungsabschnitt, der sich axial über eine größere Länge erstreckt, können auch mehrere erfindungsgemäß ausgestaltete Ritzel als Einzel-Ritzel oder Einsteckritzel verwendet werden. Der erfindungsgemäß vorgesehene umlaufende Kragen der verschiedenen Ritzel kann dabei als Abstandhalter dienen, so dass auf separate Abstandhalter-Elemente verzichtet werden kann.

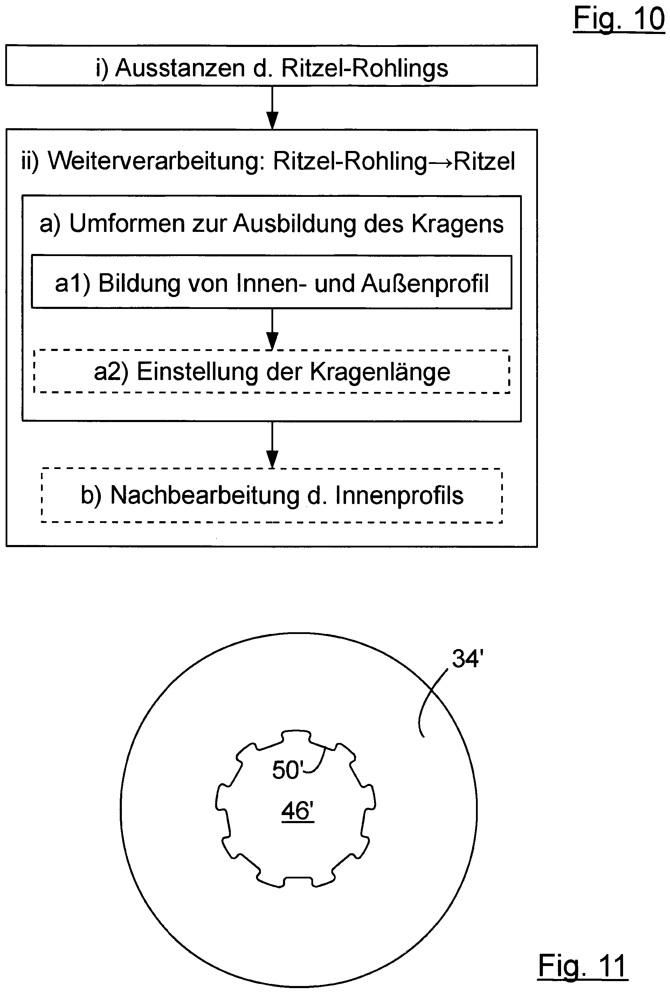

Nachfolgend wird anhand des stark vereinfachten Ablaufdiagramms in Figur 10 und den schematischen Darstellungen der Figuren 11 bis 13 ein Ausführungsbeispiel eines erfindungsgemäßen Verfahrens zur Herstellung eines erfindungsgemäßen Ritzels für einen Fahrrad-Antrieb erläutert. Optionale Schritte sind im Ablaufdiagramm von Figur 10 durch einen gestrichelten Rahmen gekennzeichnet.

Zunächst wird in einem ersten Schritt i) ein Ritzel-Rohling 34' aus einem Plattenmaterial ausgestanzt. Der ausgestanzte Ritzel-Rohling 34' umfasst wenigstens ein zentrales Vorloch 46'. Dieses ist bevorzugt nicht kreisrund sondern weist bereits eine Mehrzahl von radial nach innen vorstehenden Vorsprüngen 50' auf (vgl. Fig. 11)

Der Ritzel-Rohling 34' wird in einem weiteren Schritt ii) zum eigentlichen Ritzel 34 weiterverarbeitet.

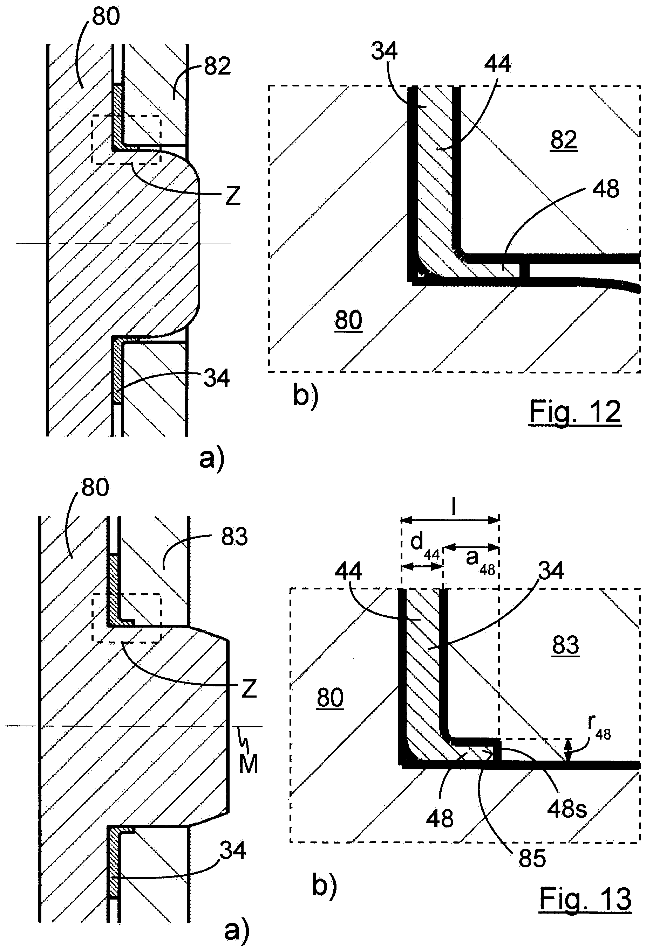

Dabei wird der Ritzel-Rohling 34' zunächst in einem Schritt a) umgeformt, wobei ein Stempel 80 (vgl. Fig. 12) durch das Vorloch 46' des Ritzel-Rohlings 34' in eine Matrize 82 gedrückt wird, so dass ein Innenring 44 mit einer zentralen Öffnung 46 sowie ein einstückig mit dem Innenring 44 ausgebildeter und axial von diesem zu einer Seite vorstehender, umlaufender Kragen 48 ausgebildet wird. Der Kragen 48 entsteht dabei aus Material, welches das zentrale Vorloch 46' des Ritzel-Rohlings 34' umgibt und definiert die zentrale Öffnung 46 des endgültigen Ritzels 34.

Die Querschnittsform von Stempel 80 und Matrize 82 in einer Ebene senkrecht zur Mittelachse M ist dabei nicht rund sondern so gewählt, dass im Schritt a), vorliegend genauer in einem Unter-Schritt a1), ein Außenprofil 49 mit mehreren radialen Vertiefungen 52 und ein Innenprofil 47 mit mehreren radial nach innen vorstehenden radialen Vorsprüngen 50 am Kragen 48 ausgebildet werden, wobei die radialen Vertiefungen 52 des Außenprofils 49 und die radialen Vorsprünge 50 des Innenprofils 47 sich hinsichtlich Anzahl und Anordnung entsprechen.

Gewünschtenfalls kann die axiale Abmessung a₄₈ (Kragenlänge) des Kragens 48 in einem nachfolgenden Umform-Schritt a2) genauer eingestellt werden, in dem der in Schritt a1) verwendete Stempel 82 durch einen weiteren Stempel 83 ersetzt wird, der eine zusätzliche Formfläche 85 zur Definition der Stirnseite 48s des Kragens 48 aufweist. Hierdurch kann auch die Planheit der Stirnseite 48s eingestellt werden. Es kann vorkommen, dass sich hierdurch der Krümmungsradius des Übergangs vom Innenring 44 zur radialen Innenseite des Kragens 48 verändert, wie aus einem Vergleich der Figuren 12 und 13 hervorgeht.

Schließlich kann optional die Form des Innenprofils des Kragens nachbeabeitet, insbesondere nachgeschnitten werden, so dass beispielsweise aus der in Figur 7 durch eine gestrichelte Linie angedeuteten Vorform 51 die dort in durchgezogenen Linien dargestellte, endgültige Form des Innenprofils 47 erzeugt wird.

Das erfindungsgemäße Verfahren ermöglicht eine einfache und günstige Herstellung eines Ritzels mit guten Drehmomentübertragungseigenschaften.

## Patentansprüche

1. Ritzel (34) für einen Fahrrad-Antrieb (39), umfassend:
einen Außenring (40) mit einer Außenverzahnung (42) zum Eingriff in eine Fahrradkette (30),
einen koaxial zu dem Außenring (40) angeordneten und drehfest mit diesem verbundenen Innenring (44) mit einer zentralen Öffnung (46),
einen einstückig mit dem Innenring (44) ausgebildeten und axial zu einer Seite von diesem vorstehenden, umlaufenden Kragen (48), der als durchgezogener Kragen ausgebildet ist,
wobei an der radialen Innenseite des Kragens (48) ein Innenprofil (47) mit mehreren, radial nach innen vorstehenden radialen Vorsprüngen (50) vorgesehen ist, wobei an der radialen Außenseite des Kragens (48) ein Außenprofil (49) mit mehreren radialen Vertiefungen (52) vorgesehen ist, die den radialen Vorsprüngen (50) des Innenprofils (47) hinsichtlich Anzahl und Anordnung entsprechen, **dadurch gekennzeichnet, dass** jeder der radialen Vorsprünge (50) des Innenprofils (47) eine bezüglich einer vorgegebenen Drehrichtung (D) um eine Mittelachse (M) des Ritzels (34) vorlaufend angeordnete erste Flanke (50.1) und eine bezüglich der vorgegebenen Drehrichtung (D) nachlaufend angeordnete zweite Flanke (50.2) aufweist, wobei für wenigstens einen, vorzugsweise für jeden der radialen Vorsprünge (50) des Innenprofils (47) die erste (50.1) und die zweite Flanke (50.2) nicht spiegelsymmetrisch zueinander ausgebildet sind.

2. Ritzel (34) nach Anspruch 1,
**dadurch gekennzeichnet, dass** die radialen Vorsprünge (50) des Innenprofils (47) des umlaufenden Kragens (48) als Mitnehmer-Elemente dienen, die dazu ausgebildet sind, Drehmoment von dem Ritzel (34) direkt auf einen Antreiber (60) an einer Hinterradnabe (17) eines Fahrrads (10) zu übertragen.

3. Ritzel (34) nach Anspruch 2,
**dadurch gekennzeichnet, dass** die erste Flanke (50.1) des wenigstens einen radialen Vorsprungs (50) des Innenprofils (47) radial länger ausgebildet ist als die zweite Flanke (50.2).

4. Ritzel (34) nach einem der vorhergehenden Ansprüche,
**dadurch gekennzeichnet, dass** eine axiale Stirnfläche (48s) des umlaufenden Kragens (48) axial zwischen einer Mittelebene (E₄₄) des Innenrings (44) und einer Mittelebene (E₄₂) der Außenverzahnung (42) zum Eingriff in eine Fahrradkette (30) oder einer Mittelebene (E₄₀) des Außenrings (40)angeordnet ist.

5. Ritzel-Kassette (32) für einen Fahrrad-Antrieb (39), umfassend ein Ritzelpaket (31) mit mehreren, koaxial angeordneten, axial voneinander beabstandeten und drehfest miteinander verbundenen Ritzeln (33) mit unterschiedlichen Durchmessern, wobei eines dieser Ritzel ein Abschlussritzel (36) ist, welches dazu ausgebildet ist, direkt Drehmoment auf einen Antreiber (60) an einer Hinterradnabe (17) eines Fahrrads (10) zu übertragen,
**dadurch gekennzeichnet, dass** das Abschlussritzel (36) ein Ritzel (34) nach einem der Ansprüche 1 bis 4 ist.

6. Fahrrad-Antrieb (39), umfassend
einen Antreiber (60) und wenigstens ein Ritzel (34) nach einem der Ansprüche 1 bis 4 und/oder eine Ritzel-Kassette (32) nach Anspruch 5.

7. Verfahren zur Herstellung eines Ritzels (34) für einen Fahrrad-Antrieb (39), umfassend die folgenden Schritte:
i) Ausstanzen eines Ritzel-Rohlings (34') mit einem zentralen Vorloch (46'),
ii) Weiterverarbeiten des Ritzel-Rohlings (34) zu einem Ritzel (34) mit einer zentralen Öffnung (46), einem Innenring (44), und einem einstückig mit dem Innenring (44) ausgebildeten und axial zu einer Seite von diesem vorstehenden umlaufenden Kragen (48), wobei der Schritt ii) wenigstens den folgenden Schritt umfasst:
a) Umformen des Ritzel-Rohlings (34'), wobei ein Stempel durch das Vorloch (46') des Ritzel-Rohlings (34) in eine Matrize gedrückt wird, um den umlaufenden Kragen (48) zu bilden, **dadurch gekennzeichnet, dass** durch das Umformen in Schritt a) sowohl ein Innenprofil (47, 51) mit mehreren, radial nach innen vorstehenden radialen Vorsprüngen (50) an der radialen Innenseite des Kragens (48) ausgebildet wird, als auch an der radialen Außenseite des Kragens (48) ein Außenprofil (49) mit mehreren radialen Vertiefungen (52) ausgebildet wird, die den radialen Vorsprüngen (50) des Innenprofils (47) hinsichtlich Anzahl und Anordnung entsprechen.

8. Verfahren nach Anspruch 7,
**dadurch gekennzeichnet, dass** in Schritt i) das zentrale Vorloch (46') so ausgebildet wird, dass es eine Mehrzahl von radial nach innen vorstehenden Vorsprüngen (50') aufweist, die den radial nach innen vorstehenden Vorsprüngen (50) des Innenprofils (47) des in Schritt ii) ausgebildeten Kragens (48) hinsichtlich Anzahl und Anordnung entsprechen.

9. Verfahren nach Anspruch 7 oder 8,
**dadurch gekennzeichnet, dass** der Schritt ii) nach dem Schritt a) weiterhin den folgenden Schritt umfasst:
b) Nachbearbeiten des beim Umformverfahren hergestellten Innenprofils (47) des umlaufenden Kragens (48), vorzugsweise durch Schneiden oder Fräsen.

10. Verfahren nach Anspruch 9,
**dadurch gekennzeichnet, dass** beim Schritt b) für wenigstens einen der Vorsprünge (50) des Innenprofils (47) eine bezüglich einer ausgewählten Drehrichtung (D) vorlaufend angeordnete erste Flanke (50.1) des Vorsprungs (50) oder/und eine bezüglich der ausgewählten Drehrichtung (D) nachlaufend angeordnete zweite Flanke (50.2) des Vorsprungs (50) so nachbearbeitet wird oder werden, dass nach dem Nachbearbeiten die erste Flanke (50.1) radial länger ausgebildet ist als die zweite Flanke (50.2).

11. Verfahren nach einem der Ansprüche 7 bis 10,
**dadurch gekennzeichnet, dass** der Schritt a) weiter den folgenden Schritt umfasst:
a2) Umformen des Ritzel-Rohlings (34') bzw. des Ritzels (34), so dass eine vorgegebene axiale Abmessung (a₄₈) des Kragens (48) eingestellt wird.

## Claims

1. Sprocket (34) for a bicycle drive (39), comprising:
an outer ring (40) with an outer toothing (42) for engagement in a bicycle chain (30),
an inner ring (44) which is disposed so as to be coaxial with and co-rotationally connected to the outer ring (40) and has a central opening (46),
an encircling collar (48) which is formed so as to be integral to the inner ring (44) and projects axially to one side of the latter and is formed as a continuous collar,
wherein provided on the radially inner side of the collar (48) is an inner profile (47) having a plurality of radial projections (50) which project radially inwards, wherein provided on the radially outer side of the collar (48) is an outer profile (49) having a plurality of radial depressions (52) which in terms of number and arrangement correspond to the radial projections (50) of the inner profile (47), **characterized in that** each of the radial projections (50) of the inner profile (47) has a first flank (50.1) which is disposed so as to lead in terms of a predefined rotation direction (D) about a central axis (M) of the sprocket (34), and a second flank (50.2) which is disposed so as to trail in terms of the predefined rotation direction (D), wherein, for at least one, preferably for each, of the radial projections (50) of the inner profile (47), the first (50.1) and the second flank (50.2) are not designed to be mutually mirror-symmetrical.

2. Sprocket (34) according to Claim 1,
**characterized in that** the radial projections (50) of the inner profile (47) of the encircling collar (48) serve as entrainment elements which are designed to transmit torque from the sprocket (34) directly to a driver (60) on a rear wheel hub (17) of a bicycle (10).

3. Sprocket (34) according to Claim 2,
**characterized in that** the first flank (50.1) of the at least one radial projection (50) of the inner profile (47) is designed to be radially longer than the second flank (50.2).

4. Sprocket (34) according to one of the preceding claims,
**characterized in that** an axial end face (48s) of the encircling collar (48) is disposed axially between a central plane (E₄₄) of the inner ring (44) and a central plane (E₄₂) of the outer toothing (42) for engagement in a bicycle chain (30), or a central plane (E₄₀) of the outer ring (40).

5. Sprocket cassette (32) for a bicycle drive (39), comprising a sprocket pack (31) having a plurality of coaxially disposed, axially mutually spaced apart and co-rotationally connected sprockets (33) with different diameters, wherein one of these sprockets is a final sprocket (36) which is designed to transmit torque directly to a driver (60) on a rear wheel hub (17) of a bicycle (10),
**characterized in that** the final sprocket (36) is a sprocket (34) according to one of Claims 1 to 4.

6. Bicycle drive (39), comprising
a driver (60) and at least one sprocket (34) according to one of Claims 1 to 4 and/or a sprocket cassette (32) according to Claim 5.

7. Method for producing a sprocket (34) for a bicycle drive (39), comprising the following method steps:
i) stamping a sprocket blank (34') having a central pilot hole (46');
ii) further processing the sprocket blank (34) so as to form a sprocket (34) having a central opening (46), an inner ring (44) and an encircling collar (48) which is formed so as to be integral to the inner ring (44) and projects axially to one side of the latter;
wherein step ii) comprises at least the following method step:
a) forming the sprocket blank (34'), a punch being pressed through the pilot hole (46') of the sprocket blank (34) into a die to form the encircling collar (48); **characterized in that**, by way of the forming in step a), both an inner profile (47, 51) having a plurality of radial projections (50) which project radially inwards on the radially inner of the collar (48) is formed, as well as on the radially outer side of the collar (48) an outer profile (49) having a plurality of radial depressions (52) which in terms of number and arrangement correspond to the radial projections (50) of the inner profile (47).

8. Method according to Claim 7,
**characterized in that** in step i) the central pilot hole (46') is formed in such a way that it has a plurality of radially inward-projecting projections (50') which in terms of number and arrangement correspond to the radially inward-projecting projections (50) of the inner profile (47) of the collar (48) formed in step ii).

9. Method according to Claim 7 or 8,
**characterized in that** step ii) after step a) furthermore comprises the following step:
b) post-machining the inner profile (47) of the encircling collar (48) produced by the forming process, preferably by cutting or milling.

10. Method according to Claim 9,
**characterized in that** in step b) for at least one of the projections (50) of the inner profile (47), a first flank (50.1) of the projection (50), which is disposed so as to lead in terms of a selected rotation direction (D), and/or a second flank (50.2) of the projection (50), which is disposed so as to trail in terms of the selected rotation direction (D), are/is post-machined in such a way that, after post-machining, the first flank (50.1) is designed to be radially longer than the second flank (50.2).

11. Method according to one of Claims 7 to 10,
**characterized in that** step a) furthermore comprises the following step:
a2) forming the sprocket blank (34') or the sprocket (34) so that a predetermined axial dimension (a₄₈) of the collar (48) is set.

## Revendications

1. Pignon (34) pour une transmission de bicyclette (39), comprenant :
un anneau extérieur (40) avec une denture extérieure (42) destinée à venir en engagement avec une chaîne de bicyclette (30),
un anneau intérieur (44) agencé coaxialement à l'anneau extérieur (40) et solidaire en rotation de celui-ci, avec une ouverture centrale (46),
un collier circonférentiel (48) formé d'un seul tenant avec l'anneau intérieur (44) et faisant saillie axialement d'un côté de celui-ci, ce collier étant réalisé sous forme de collier continu,
un profil intérieur (47), ayant plusieurs protubérances radiales (50) faisant saillie radialement vers l'intérieur, étant prévu sur le côté intérieur radial du collier (48), un profil extérieur (49) avec une pluralité d'évidements radiaux (52) étant prévu sur le côté extérieur radial du collier (48), qui correspondent en nombre et en disposition aux protubérances radiales (50) du profil intérieur (47), **caractérisé en ce que** chacune des protubérances radiales (50) du profil intérieur (47) présente un premier flanc (50.1) agencé en avant autour d'un axe central (M) du pignon (34) par rapport à un sens de rotation (D) prédéfini, et un deuxième flanc (50.2) agencé en arrière par rapport au sens de rotation (D) prédéfini, le premier flanc (50.1) et le deuxième flanc (50.2) n'étant pas symétriques l'un par rapport à l'autre pour au moins une, de préférence pour chacune, des protubérances radiales (50) du profil intérieur (47).

2. Pignon (34) selon la revendication 1,
**caractérisé en ce que** les protubérances radiales (50) du profil intérieur (47) du collier circonférentiel (48) servent d'éléments d'entraînement conçus pour transmettre un couple de rotation du pignon (34) directement à un organe d'entraînement (60) sur un moyeu de roue arrière (17) d'une bicyclette (10).

3. Pignon (34) selon la revendication 2,
**caractérisé en ce que** le premier flanc (50.1) de ladite au moins une protubérance radiale (50) du profil intérieur (47) est réalisé de façon à être radialement plus long que le deuxième flanc (50.2).

4. Pignon (34) selon l'une des revendications précédentes,
**caractérisé en ce qu'**une face axiale (48s) du collier circonférentiel (48) est agencée axialement entre un plan médian (E₄₄) de l'anneau intérieur (44) et un plan médian (E₄₂) de la denture extérieure (42) destinée à venir en engagement avec une chaîne de bicyclette (30) ou un plan médian (E₄₀) de l'anneau extérieur (40).

5. Cassette de pignons (32) pour une transmission de bicyclette (39), comprenant un ensemble de pignons (31) avec plusieurs pignons (33) de différents diamètres, agencés coaxialement, espacés axialement les uns des autres et reliés entre eux de manière solidaire en rotation, l'un de ces pignons étant un pignon final (36) qui est conçu pour transmettre directement un couple de rotation à un organe d'entraînement (60) sur un moyeu de roue arrière (17) d'une bicyclette (10),
**caractérisée en ce que** le pignon final (36) est un pignon (34) selon l'une des revendications 1 à 4.

6. Transmission de bicyclette (39), comprenant
un organe d'entraînement (60) et au moins un pignon (34) selon l'une des revendications 1 à 4 et/ou une cassette de pignons (32) selon la revendication 5.

7. Procédé de fabrication d'un pignon (34) pour une transmission de bicyclette (39), comprenant les étapes suivantes :
i) découpe d'une ébauche de pignon (34') comportant un avant-trou central (46'),
ii) transformation de l'ébauche de pignon (34) en un pignon (34) ayant une ouverture centrale (46), un anneau intérieur (44), et un collier circonférentiel (48) formé d'un seul tenant avec l'anneau intérieur (44) et faisant saillie axialement d'un côté de celui-ci,
l'étape ii) comprenant au moins l'étape suivante :
a) formage de l'ébauche de pignon (34'), un poinçon étant enfoncé dans une matrice à travers l'avant-trou (46') de l'ébauche de pignon (34) pour former le collier circonférentiel (48),
**caractérisé en ce que** le formage à l'étape a) permet de former à la fois un profil intérieur (47, 51) avec une pluralité de protubérances radiales (50) faisant saillie radialement vers l'intérieur sur le côté radialement intérieur du collier (48), et un profil extérieur (49) sur le côté extérieur radial du collier (48) ayant une pluralité d'évidements radiaux (52) qui correspondent en nombre et en disposition aux protubérances radiales (50) du profil intérieur (47).

8. Procédé selon la revendication 7,
**caractérisé en ce que**, à l'étape i), l'avant-trou central (46') est formé de manière à comporter une pluralité de protubérances (50') faisant saillie radialement vers l'intérieur, correspondant en nombre et en disposition aux protubérances (50) faisant saillie radialement vers l'intérieur du profil interne (47) du collier (48) formé à l'étape ii).

9. Procédé selon la revendication 7 ou la revendication 8,
**caractérisé en ce que** l'étape ii) comprend en outre, après l'étape a), l'étape suivante :
b) le ré-usinage, de préférence par découpe ou fraisage, du profil interne (47) du collier circonférentiel (48) réalisé lors du procédé de formage.

10. Procédé selon la revendication 9,
**caractérisé en ce que**, lors de l'étape b), pour au moins l'une des protubérances (50) du profil intérieur (47), un premier flanc (50.1) de la protubérance (50), agencé en avant par rapport à un sens de rotation (D) sélectionné, ou/et un deuxième flanc (50.2) de la protubérance (50) agencé en arrière par rapport au sens de rotation (D) prédéfini, est ou sont ré-usinés de telle sorte qu'après le ré-usinage, le premier flanc (50.1) est formé de façon à être radialement plus long que le deuxième flanc (50.2).

11. Procédé selon l'une des revendications 7 à 10,
**caractérisé en ce que** l'étape a) comprend en outre l'étape suivante :
a2) mise en forme de l'ébauche de pignon (34') ou du pignon (34) de manière à obtenir une dimension axiale (a₄₈) prédéterminée du collier (48) .
